# EUROPEAN PATENT APPLICATION

(11) **EP 4 787 570 A2**
(43) Date of publication of application: **05.08.2026**
(21) Application number: 26183401.4
(22) Date of filing: 20.11.2023
(51) Int. Cl.: H01M 50/204

(54) **BATTERY MODULE AND BATTERY PACK INCLUDING SAME**

(30) Priority: 05.12.2022 KR 20220168016; 03.03.2023 KR 20230028738
(62) Divisional of application: 23900950.9
(71) Applicant: LG Energy Solution, Ltd., Seoul 07335 (KR)
(72) Inventor: PARK, Jeong-Hoon, 34122 Daejeon (KR); JUNG, Hye-Mi, 34122 Daejeon (KR); KIM, Soo-Youl, 34122 Daejeon (KR)
(74) Representative: Plasseraud IP

(57) **Abstract**

A battery module according to the present disclosure includes: at least one battery cell; and a module case having an inner space accommodating the battery cell, and the module case includes: weld bead portions where one plate and another plate are welded on an edge line where they meet each other; and a pressure relief portion having a gap between the plates that are not welded.

## Description

### TECHNICAL FIELD

The present disclosure relates to a battery module and a battery pack including the same, and more specifically, it relates to a battery module with excellent safety against thermal events and a battery pack including the same.

The present application claims priority to Korean Patent Application No. 10-2022-0168016 filed on December 05, 2022 and Korean Patent Application No. 10-2023-0028738 filed on March 03, 2023 in the Republic of Korea, the disclosures of which are incorporated herein by reference.

### BACKGROUND ART

As technology development and demand for various mobile devices, electric vehicles, energy storage systems (ESSs), or the like significantly increase, interest in and demand for secondary batteries as an energy source are rapidly increasing. Although nickel-cadmium batteries or nickel-hydrogen batteries have conventionally been used widely as secondary batteries, nowadays, lithium secondary batteries are widely used because they have advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Currently, the operating voltage of one lithium secondary battery cell widely used is approximately 2.5V to 4.5V. Therefore, in the case of electric vehicles or power storage devices that require large capacity and high output, a battery module or battery pack is configured by connecting multiple lithium secondary batteries in series and/or parallel and used as an energy source. In particular, in order to satisfy the output or capacity required for electric vehicles, the battery module or battery pack includes a large number of lithium secondary batteries.

Meanwhile, if a thermal event occurs in a battery module containing multiple battery cells so that heat continues to be accumulated inside the battery module, thermal runaway may rapidly spread between the battery cells. This may lead to extensive damage such as explosion of the battery module.

Therefore, for user safety, the battery module or battery pack needs to be designed to suppress ignition or delay the spread thereof in the early stages of a thermal event.

As is widely known, the three elements of combustion are fuel, oxygen, and heat. The battery cell corresponding to the fuel among of them is almost impossible to remove when a thermal event occurs. Accordingly, in order to suppress the thermal event or delay the spread thereof, there is an increasing need for a battery module capable of effectively discharging heat to the outside of the battery module. In particular, if the pressure inside the battery module fails to be quickly relieved in the case of internal ignition of the battery module, it is more likely to explode, so the solution to this problem is required.

### DISCLOSURE

### Technical Problem

The present disclosure has been designed to solve the problems of the related art, and therefore the present disclosure is directed to providing a battery module capable of effectively dispersing and relieving internal pressure when a thermal event occurs inside the battery module.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: at least one battery cell; and a module case having an inner space accommodating the battery cell, wherein the module case may include: weld bead portions where one plate and another plate are welded on an edge line where they meet each other; and a pressure relief portion having a gap between the plates that are not welded.

A plurality of pressure relief portions may be provided on top of the module case, which covers the top of the battery cell, at predetermined intervals in the longitudinal direction of the module case.

The module case may include: a case body configured to surround the top, bottom, left, and right faces of the inner space; and end covers configured to cover the front and rear faces of the inner space and coupled to the case body.

The case body may include: a top plate configured to cover the upper face of the inner space; and a U-frame including a bottom plate configured to cover the lower face of the inner space and a pair of side plates configured to cover the left and right faces of the inner space, which are integrally formed with each other.

The module case may be configured such that both edge lines of the top plate in the longitudinal direction thereof and upper edge lines of the pair of side plates in the longitudinal direction thereof are welded, excluding the pressure relief portion.

In the pressure relief portion, the top plate may have a rib fitting groove recessed in a direction of intersecting the side plate, and the side plate may have an assembly guide rib inserted perpendicularly into the rib fitting groove.

The rib fitting groove and the assembly guide rib may be configured to be shape-fitted to each other.

The top plate may further include a double groove recessed from the rib fitting groove toward the center of the top plate, and the module case may include an upper hole configured by being surrounded by the double groove and the assembly guide rib.

The side plate may have its upper surface in contact with the lower portion of the edge area of the top plate, and has a gap extension recessed to not come into contact with the lower portion of the edge area of the top plate in the pressure relief portion.

The module case may have at least one gas venting hole provided at the bottom thereof supporting the battery cell.

The battery cell may be a pouch-type battery cell, and the gas venting hole may be provided vertically below a cell terrace where an electrode lead is provided in the pouch-type battery cell.

According to another aspect of the present disclosure, there may be provided a battery pack including the battery module described above.

### Advantageous Effects

According to one aspect of the present disclosure, it is possible to provide a battery module capable of effectively dispersing and relieving internal pressure when a thermal event occurs inside the battery module.

In addition, the present disclosure may have various other effects, and these will be described in the respective embodiments, or description of effects that may be easily inferred by those skilled in the art will be omitted.

### DESCRIPTION OF DRAWINGS

FIG. 1 is a perspective view schematically illustrating a battery module according to an embodiment of the present disclosure.
FIG. 2 is a exploded perspective view schematically illustrating the battery module in FIG. 1.
FIG. 3 is a side view of the battery module in FIG. 1.
FIG. 4 is a perspective view illustrating an assembly guide rib and a rib fitting groove of a module case according to an embodiment of the present disclosure.
FIG. 5 is a diagram illustrating the assembly guide rib and the rib fitting groove in FIG. 4, when viewed at another angle.
FIG. 6 is a plan view of a portion of the upper surface of a battery module according to an embodiment of the present disclosure.
FIG. 7 is an enlarged view of area A in FIG. 3.
FIG. 8 is a diagram illustrating the lower surface of a battery module according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

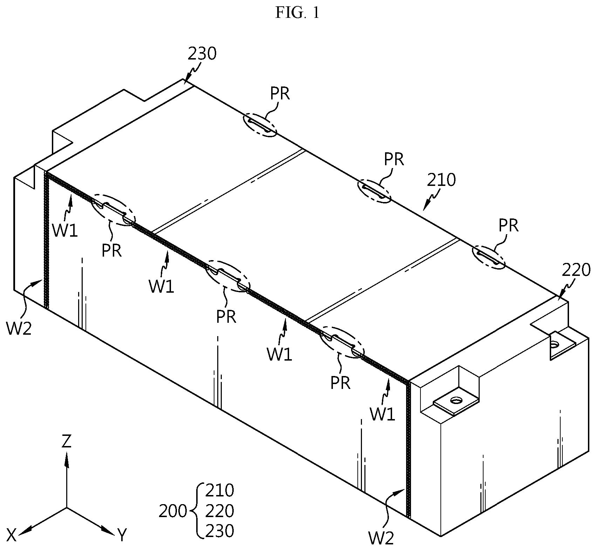

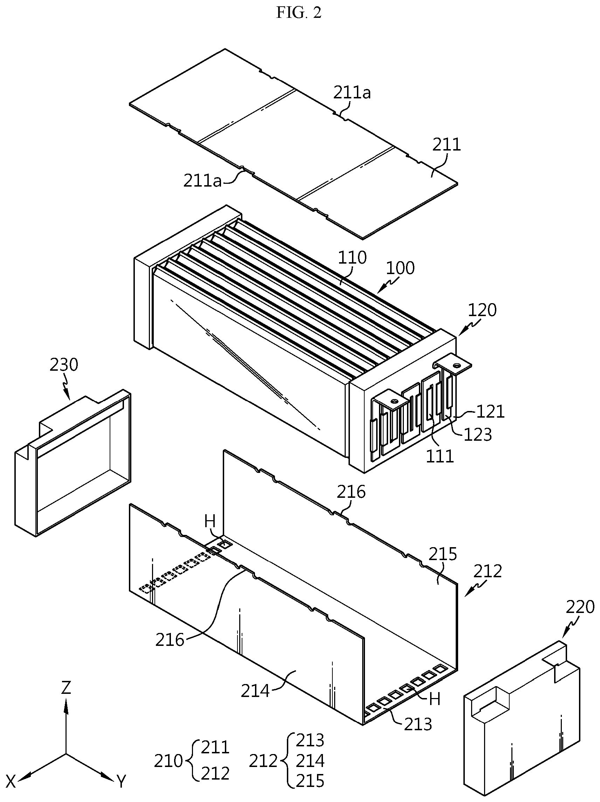

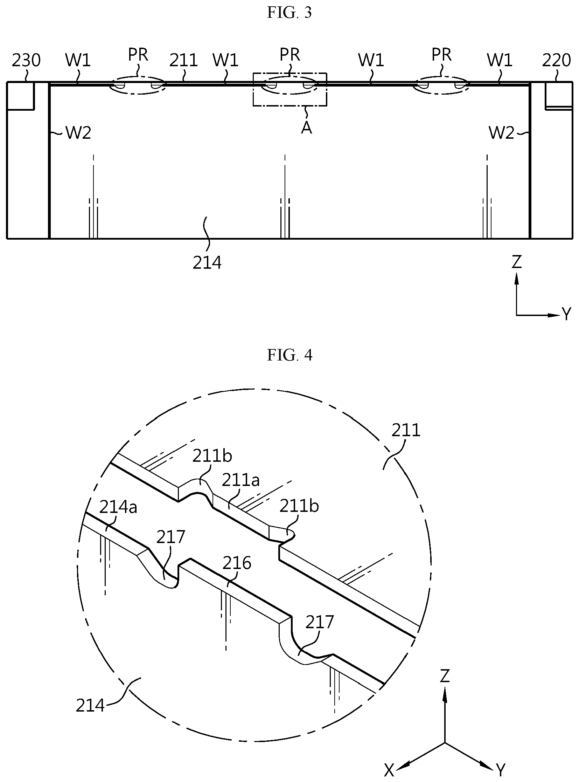

FIG. 1 is a perspective view schematically illustrating a battery module according to an embodiment of the present disclosure, FIG. 2 is a exploded perspective view schematically illustrating the battery module in FIG. 1, and FIG. 3 is a side view of the battery module in FIG. 1.

Referring to these drawings, a battery module 10 according to an embodiment of the present disclosure includes at least one battery cell 110 and a module case 200 having an inner space for accommodating the battery cell 110.

As will be described in detail later, the module case 200 according to the present disclosure includes weld bead portions W1 and W2 where one plate and another plate are welded on the edge line where they meet each other and a pressure relief portion PR having a gap between the plates that are not welded. The module case 200 with this configuration has a high bonding strength between the plates, avoiding easy deformation due to swelling of the battery cells 110, and has an effect of effectively dispersing and relieving the internal pressure when a thermal event occurs inside the battery module 10.

For example, as shown in FIG. 1, a plurality of pressure relief portions PR may be provided on the top of the module case 200, which covers the top of the battery cell 110, at predetermined intervals in the longitudinal direction (the Y-axis direction) of the module case 200. In this module case 200, if the internal pressure increases, the gap between the plates in each pressure relief portion PR may open to allow gas to vent, so that the internal pressure may be dispersed and relieved in several places.

Hereinafter, the primary configuration of the battery module 10 according to the present disclosure will be described in more detail.

First, the battery cell 110 included in the battery module 10 may be a pouch-type secondary battery with a thin plate-shaped body.

The pouch-type secondary battery includes a pouch-type exterior case, and an electrode assembly and an electrolyte accommodated in the pouch-type exterior case. For example, the pouch-type exterior case may be comprised of two pouches, and at least one of them may have a concave inner space formed thereon. So, the electrode assembly may be received in the inner space of the pouch. The edges of the two pouches may be bonded by fusing, thereby sealing the inner space accommodating the electrode assembly. An electrode lead 111 may be attached to the electrode assembly, and the electrode lead 111 may be interposed between the fused portions of the pouch-type exterior case and exposed to the outside of the pouch-type exterior case, thereby functioning as an electrode terminal of the pouch-type secondary battery. Here, the fused portion of the pouch-type exterior case on the perimeter of the pouch-type exterior case, where the electrode lead 111 is located, will be referred to as a "cell terrace".

These pouch-type secondary batteries, as shown in FIG. 2, may be erected in the upward and downward directions and stacked in the left and right directions to configure a cell stack 100, and may then be intensively stored inside the module case 200.

A bus-bar frame assembly 120 may be used to electrically connect the pouch-type secondary batteries.

The bus-bar frame assembly 120 may generally include a bus-bar frame 121, which is a plastic injection product, and bus-bars 123 provided in the form of a metal bar made of electrically conductive copper, aluminum, or nickel, and may be disposed at the front and/or rear of the cell stack 100.

The bus-bar 123 may be configured to come into direct contact the electrode lead 111 of the pouch-type secondary battery. In particular, the bus-bar 123 may be configured to remain in the contact state with the electrode lead 111 by welding or the like.

For example, the pouch-type battery cells 110 may be connected in series and/or parallel by welding positive electrode leads of N (N is a natural number) pouch-type battery cells 110 and negative electrode leads of other N pouch-type battery cells 110 to the same one bus-bar 123. The bus-bar frame 121 may be configured in an approximately plate shape having one side to which the bus-bars 123 are fixed and having lead slits through which the electrode leads 111 passes.

Meanwhile, the battery cells 110 constituting the battery module 10 according to the present disclosure do not necessarily need to be pouch-type secondary batteries. It should be noted that the pouch-type secondary battery is only an example of the battery cell 110 applicable to the battery module 10 of the present disclosure. That is, any type of secondary battery disclosed at the time of filing the present disclosure may be the battery cell 110 constituting the battery module 10 according to the present disclosure.

Primary parts of the module case 200 may be made of a metal material with high mechanical rigidity to protect the battery cells 110 and other internal components from external impacts.

Referring to FIGS. 1 and 2, the module case 200 according to an embodiment of the present disclosure may include a case body 210 provided to surround the top, bottom, left, and right faces of the inner space where the battery cells 110 are accommodated and end covers 220 and 230 that are provided to cover the front and rear faces of the inner space and are coupled to the case body 210.

The case body 210 may be configured as an approximately square tube to cover the upper, lower, and side surfaces of the cell stack 100, excluding the front and rear (the direction in which the electrode lead 111 is located in the pouch-type battery cell 110) of the cell stack 100, which has openings at both ends in the longitudinal direction. In addition, the end covers 220 and 230 may be configured to cover the openings of the case body 210. In addition, the end covers 220 and 230 may have insulated inner surfaces and may be configured such that the bus-bar frame assembly 120, excluding a portion of the bus-bar 123 that may function as an electrode terminal of the battery module 10, is not exposed to the outside.

Hereinafter, in the case body 210, the part that covers the upper face of the inner space of the module case 200 (or the upper surface of the cell stack 100) will be referred to as a top plate 211, the part that covers the lower face of the inner space (or the lower surface of the cell stack 100) will be referred to as a bottom plate 213, and the parts that cover the left and right faces of the inner space (or the side surfaces of the cell stack 100) will be referred to as a pair of side plates 214 and 215.

The case body 210 according to an embodiment of the present disclosure may be comprised of the top plate 211 and a U-frame 212. Here, the U-frame 212 indicates a component in which the bottom plate 213 and the pair of side plates 214 and 215 are integrally configured.

Specifically, the case body 210 may be provided, as shown in FIG. 1, by welding the top plate 211 and the U-frame 212 shown in FIG. 2 to each other. For example, the cell stack 100 may be disposed inside the U-frame 212, and the top plate 211 may be welded to the top of the U-frame 212. In addition, the end covers 220 and 230 may also be fixedly coupled to the case body 210 by welding.

It is easier to store the cell stack 100 inside the case body 210, which is provided by welding the top plate 211 to the top of the U-frame 212 storing the cell stack 100 as described above, compared to the case of inserting the cell stack 100 into the ready-made square tube case. In addition, as shown in FIG. 1, if the top plate 211 and the U-frame 212 are welded while pressing the cell stack 100 by the pair of side plates 214 and 215, the gap between the pair of side plates 214 and 215 may remain constant, so that the pressing force consistently acts on the cell stack 100. In this case, there is an effect of suppressing or alleviating the swelling of the battery cells 110 that may occur during charging and discharging.

As described above, the module case 200 according to this embodiment may be obtained by welding the U-frame 212 and the top plate 211 or the case body 210 and the end covers 220 and 230 to each other. As a result, the module case has the weld bead portions W1 and W2 shown in FIGS. 1 to 3.

The module case 200 according to the present disclosure includes at least one pressure relief portion PR on the edge line of the upper surface (in the longitudinal direction). The upper edge lines of the module case 200 are not entirely welded. That is, the module case 200 has a weld bead portion W1 and a pressure relief portion PR that is a non-welded section on the upper surface thereof.

The pressure relief portion PR may be configured to allow air to flow in and out of the module case 200.

For example, the upper edge lines of the U-frame 212, that is, the upper edge lines of the pair of side plates 214 and 215, and both edge lines of the top plate 211 may be welded, skipping certain sections, to produce the weld bead portions W1 and non-welded sections on both edges of the upper surface of the module case 200. The pressure relief portion PR is provided in the non-welded section and has a gap. Here, the gap may indicate a portion or space where the side plates 214 and 215 and the top plate 211 open by internal pressure.

Therefore, when a thermal event of the battery module occurs, gas may exit to the outside through the gap of the pressure relief portion PR, thereby preventing the internal pressure of the battery module 10 from rising rapidly.

In addition, a plurality of pressure relief portions PR may be provided at predetermined intervals along both edge lines of the upper surface of the module case 200, so that gas may exit through the pressure relief portions PR at several locations. Therefore, the pressure caused by the gas may be dispersed to several pressure relief portions PR, instead of being concentrated in one pressure relief portion PR.

Furthermore, referring to FIGS. 1 to 2 and 4 to 6, the module case 200 includes an assembly guide rib 216 and a rib fitting groove 211a.

Specifically, in the pressure relief portion PR, the top plate 211 has a rib fitting groove 211a that is recessed in a direction of intersecting the side plates 214 and 215, and the side plates 214 and 215 have an assembly guide rib 216 that protrudes higher than the upper surfaces 214a of the side plates 214 and 215 so as to be inserted perpendicularly into the rib fitting groove 211a.

The U-frame 212 and the top plate 211 are assembled before welding. In order to improve welding quality, the top plate 211 must be accurately placed on the top of the U-frame 212, and importantly, the top plate 211 must remain stationary without shifting or moving after the placement. According to the configuration of the assembly guide rib 216 and the rib fitting groove 211a according to the present disclosure, when placing the top plate 211 on the U-frame 212, the assembly guide ribs 216 of the pair of side plates 214 and 215 have only to be fitted one to one into the rib fitting grooves 211a, thereby greatly facilitating the assembly process.

In addition, the rib fitting groove 211a and the assembly guide rib 216 are configured to be shape-fitted to each other when coupling the same to intersect. For example, the rib fitting groove 211a and the assembly guide rib 216 may be configured to be tightly fitted to each other without any clearance.

Accordingly, even if an external force acts on the top plate 211 after assembling the top plate 211 and the U-frame 212, the top plate 211 does not move forward, backward, left, or right. In this case, especially when performing welding, the relative positions of the U-frame 212 and the top plate 211 may be maintained, thereby significantly reducing the possibility of welding defects.

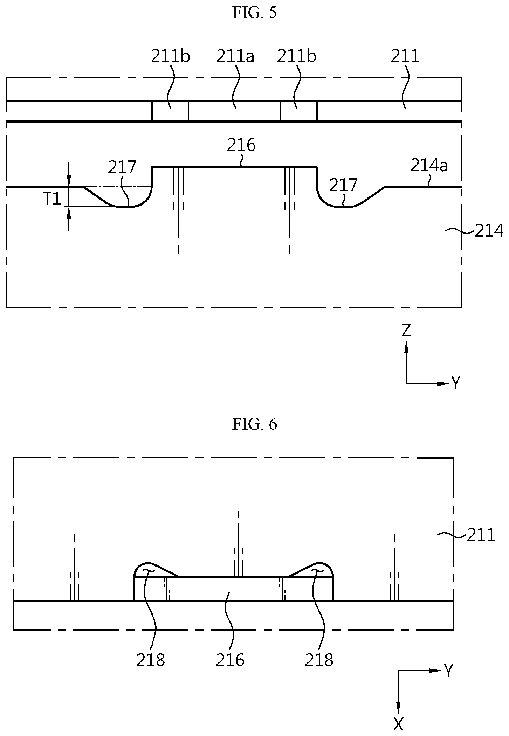

In addition, as shown in FIGS. 4 and 5, the top plate 211 may further have a double groove 211b that is further recessed from the rib fitting groove 211a toward the center of the top plate 211. The double groove 211b is a more recessed portion from the inner surface of the rib fitting groove 211a and may be configured so as not to come into contact with the assembly guide rib 216. Accordingly, when the assembly guide rib 216 of the side plate 214 or 215 is vertically inserted into the rib fitting groove 211a of the top plate 211, an upper hole 218 may be formed to be surrounded by the double groove 211b and the assembly guide rib 216 as shown in FIG. 6.

Accordingly, the module case 200 according to an embodiment of the present disclosure has the above-described upper hole 218 for each pressure relief portion PR. Therefore, pressure may be more effectively dispersed and relieved through the upper holes 218.

Referring back to FIGS. 4, 5, and 7, the side plates 214 and 215 have their upper surfaces 214a in contact with the lower portion of the edge area of the top plate 211, and has a gap extension 217 that is recessed to not come into contact with the lower portion of the edge area of the top plate 211 in the pressure relief portion PR.

That is, the lower portions of both edge areas of the top plate 211 may be placed on the upper surfaces 214a of the pair of side plates 214 and 215 and supported on the U-frame 212. In addition, the side plate 214 or 215 of the pressure relief portion PR may have a gap extension 217 recessed in the downward direction from the upper surface 214a of the side plate 214 or 215, as indicated by "T1" in FIG. 5. Although the gap extension 217 is provided at two places on the left and right sides of the assembly guide rib 216 in this embodiment, unlike this embodiment, the gap extension 217 may be provided on one of either the left side or the right side of the assembly guide rib 216, or may be provided at a position further away from the assembly guide rib 216 than in this embodiment.

According to the configuration of the gap extension 217, it is possible to clearly secure a gap between the unwelded top plate 211 and side plates 214 and 215, which may be more effective in relieving the internal pressure of the module case 200.

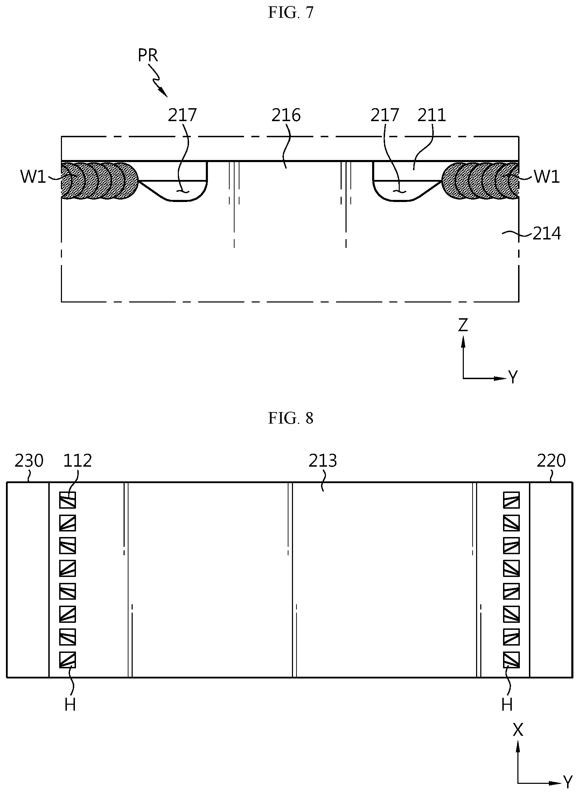

FIG. 8 is a diagram illustrating the lower surface of a battery module 10 according to an embodiment of the present disclosure.

The battery module 10 according to the present disclosure may further include gas venting holes H.

The gas venting holes H may be provided at the bottom of the module case 200 supporting the battery cells 110. For example, the gas venting holes H may be provided on the bottom plate 213 constituting the bottom of the module case 200. Specifically, the gas venting holes H according to this embodiment may be positioned on both edges along the longitudinal direction of the bottom plate 213, and the respective gas venting holes H may be disposed to be spaced apart from each other in the width direction of the bottom plate 213.

The position of the gas venting hole H corresponds to the position vertically below the cell terrace 112 where the electrode lead 111 is provided in the pouch-type battery cell 110. In the case of thermal runaway in the pouch-type battery cell 110, the electrode lead 111 tends to have the highest temperature. In addition, when the pouch-type battery cell 110 expands, the heat-fused portion of the cell terrace 112 (a front sealing portion or a rear sealing portion) is likely to break, causing gas and flame to be discharged through the same. In addition, in the inner space of the module case 200 that stores the cell stack 100 formed by stacking the pouch-type battery cells 110, there are many empty spaces between the thin cell terraces 112. Therefore, when the internal ignition of the battery module 10 occurs, gas convection is most active at the location where the cell terrace 112 is located. Since the present disclosure is configured such that the gas venting hole H is located vertically below the cell terrace 112, most of the gas generated during thermal runaway may be directed toward the lower portion of the battery module 10, thereby performing directional venting.

A battery pack (not shown) according to the present disclosure includes one or more battery modules described above. In addition to the battery module, the battery pack may further include a pack case (not shown) for storing the battery module, various devices (not shown) to control charging and discharging of the battery module, such as a BMS (Battery Management System), a current sensor, a fuse, or the like.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Further embodiments are described in the following numbered paragraphs.
1. A battery module comprising:
   at least one battery cell; and
   a module case having an inner space accommodating the battery cell,
   wherein the module case comprises: weld bead portions where one plate and another plate are welded on an edge line where they meet each other; and a pressure relief portion having a gap between the plates that are not welded.
2. The battery module according to item 1,
   wherein the pressure relief portion is formed at top of the module case that covers the top of the battery cell, and is provided in plural at predetermined intervals in the longitudinal direction of the module case.
3. The battery module according to item 1,
   wherein the module case comprises:
   a case body configured to surround the top, bottom, left, and right faces of the inner space; and
   end covers configured to cover the front and rear faces of the inner space and coupled to the case body.
4. The battery module according to item 3,
   wherein the case body comprises:
   a top plate configured to cover the upper face of the inner space; and
   a U-frame comprising a bottom plate configured to cover the lower face of the inner space and a pair of side plates configured to cover the left and right faces of the inner space, which are integrally formed with each other.
5. The battery module according to item 4,
   wherein the module case is configured
   such that both edge lines of the top plate in the longitudinal direction thereof and upper edge lines of the pair of side plates in the longitudinal direction thereof are welded, excluding the pressure relief portion.
6. The battery module according to item 4,
   wherein, in the pressure relief portion,
   the top plate has a rib fitting groove recessed in a direction of intersecting the side plate, and the side plate has an assembly guide rib inserted perpendicularly into the rib fitting groove.
7. The battery module according to item 6,
   wherein the rib fitting groove and the assembly guide rib are configured to be shape-fitted to each other.
8. The battery module according to item 6,
   wherein the top plate further comprises a double groove recessed from the rib fitting groove toward the center of the top plate, and
   wherein the module case comprises an upper hole configured by being surrounded by the double groove and the assembly guide rib.
9. The battery module according to item 4,
   wherein the side plate has its upper surface in contact with the lower portion of the edge area of the top plate, and has a gap extension recessed to not come into contact with the lower portion of the edge area of the top plate in the pressure relief portion.
10. The battery module according to item 1,
   wherein the module case has
   at least one gas venting hole provided at the bottom thereof supporting the battery cell.
11. The battery module according to item 10,
   wherein the battery cell is a pouch-type battery cell, and
   wherein the gas venting hole is provided vertically below a cell terrace where an electrode lead is provided in the pouch-type battery cell.
12. A battery pack comprising the battery module according to any one of items 1 to 11.

## Claims

1. A battery module (10) comprising:
at least one battery cell (110); and
a module case (200) having an inner space accommodating the battery cell (110),
wherein the module case (200) comprises: weld bead portions (W1, W2) where one plate and another plate are welded on an edge line where they meet each other; and a pressure relief portion (PR) having a gap between the plates that are not welded,
wherein the module case (200) comprises:
a case body (210) configured to surround the top, bottom, left, and right faces of the inner space; and
end covers (220, 230) configured to cover the front and rear faces of the inner space and coupled to the case body (210),
wherein the case body (210) comprises:
a top plate (211) configured to cover the upper face of the inner space;
a bottom plate configured to cover the lower face of the inner space; and
a pair of side plates configured to cover the left and right faces of the inner space,
wherein the side plate (214; 215) has its upper surface in contact with the lower portion of the edge area of the top plate (211), and has a gap extension (217) recessed to not come into contact with the lower portion of the edge area of the top plate (211) in the pressure relief portion (PR).

2. The battery module (10) according to claim 1,
wherein the pressure relief portion (PR) is formed at top of the module case (200) that covers the top of the battery cell (110), and is provided in plural at predetermined intervals in the longitudinal direction (Y-axis direction) of the module case (200).

3. The battery module according to claim 1,
wherein the module case (200) is configured
such that both edge lines of the top plate (211) in the longitudinal direction thereof and upper edge lines of the pair of side plates in the longitudinal direction thereof are welded, excluding the pressure relief portion (PR).

4. The battery module according to claim 1,
wherein, in the pressure relief portion (PR),
the top plate (211) has a rib fitting groove (211a) recessed in a direction of intersecting the side plate (214; 215), and the side plate (214; 215) has an assembly guide rib (216) inserted perpendicularly into the rib fitting groove (211a)

5. The battery module (10) according to claim 4,
wherein the rib fitting groove (211a) and the assembly guide rib (216) are configured to be shape-fitted to each other.

6. The battery module (10) according to claim 4,
wherein the top plate (211) further comprises a double groove (211b) recessed from the rib fitting groove (211a) toward the center of the top plate (211), and
wherein the module case (200) comprises an upper hole (218) configured by being surrounded by the double groove (211b) and the assembly guide rib (216).

7. The battery module (10) according to claim 1,
wherein the module case (200) has
at least one gas venting hole (H) provided at the bottom thereof supporting the battery cell (110).

8. The battery module (10) according to claim 7,
wherein the battery cell (110) is a pouch-type battery cell, and
wherein the gas venting hole (H) is provided vertically below a cell terrace (112) where an electrode lead (111) is provided in the pouch-type battery cell.

9. A battery pack comprising the battery module (10) according to any one of claims 1 to 8.
